# EUROPEAN PATENT SPECIFICATION

(11) **EP 2 943 103 B1**
(45) Date of publication and mention of the grant of the patent: **21.09.2016**
(21) Application number: 14702096.0
(22) Date of filing: 14.01.2014
(51) Int. Cl.: A47J 31/44

(54) **MACHINE FOR PREPARATION OF BEVERAGES WITH MULTIFUNCTIONAL INTERFACE AND PROCESS FOR OPERATING SAID MACHINE**
MASCHINE ZUR ZUBEREITUNG VON GETRÄNKEN MIT EINER MULTIFUNKTIONELLEN SCHNITTSTELLE UND VERFAHREN ZUM BETREIBEN DIESER MASCHINE
MACHINE DE PRÉPARATION DE BOISSONS AYANT UNE INTERFACE MULTIFONCTIONNELLE ET PROCÉDÉ DE FONCTIONNEMENT DE LADITE MACHINE

(30) Priority: 14.01.2013 PT 10673413
(43) Date of publication of application: 18.11.2015
(73) Proprietor: Novadelta-Comércio e Industria de Cafés, S.A., 1950-709 Lisboa (PT)
(72) Inventor: NABEIRO, Rui Miguel, 7370-112 Campo Maior (PT)
(74) Representative: Miranda de Sousa, João Paulo Vaz
(86) International application number: PCT/PT2014/000004
(87) International publication number: WO 2014/109661

(56) References cited:
- WO-A1-2011/144720
- CH-A5- 693 016
- DE-U1- 20 304 134
- US-A1- 2012 285 989

## Description

### Field of the invention

The present invention refers to the field of machines for preparation of beverages by means of extraction, in particular machines presenting an interface that integrates the actuation of different relevant operation functions.

The present invention further refers to a process for operation of the beverage preparation machine according to the invention.

### Prior art

The prior art includes several solutions relative to the interfaces for actuation and control of the operation of beverage preparation machines according to the aforementioned type, in particular coffee machines by means of extraction. Such machines typically present a plurality of actuation elements and modes, each aiming a particular function such as for example the start and end of a beverage preparation cycle, or the option for a given amount of beverage to be produced, as well as other options of use. Such actuation elements are typically provided in the form of mechanical buttons or of a digital interface distributed over the frontal zone of the machine chassis and dimensionally configured for actuation by means of a finger. The US 2007/0214966 A1 discloses one example of this approach. The configuration of the actuation means in form of a handle with the approximate dimension of a hand results more advantageous for an ergonomic use, in particular of machines for professional use. The CH 693016 A5 discloses a solution in which a control device presents a single interface in form of handle configured as a wheel and with the possibility of actuating different operation parameters by means of rotation around a longitudinal axis thereof, presenting an actuation button and providing the possibility of different axial positions. The EP 1224894 B1 discloses an interface in form of rotating handle that can be blocked in one amongst a plurality of possible selections and further presenting an actuation element for actuating a start contact. The EP 2528044 A1 discloses a similar interface, not configured as a handle, but rather configured for actuation by means of a single finger.

Moreover, it is advantageous in ergonomic terms when also the height of beverage discharge can be managed in proximity of the remanding operation parameters of the machine. None of said interfaces provides regulation of the beverage discharge position.

It results therefore the need to optimize such a use interface in view of simplicity of actuation by a user and provision of a high number of actuation options and control of operation parameters. This need is further added in the case of machines for professional use, including machines with a plurality of extraction devices and periods of intense use thereof.

### General description of the invention

The goal of the present invention is to provide a machine for preparation of beverages, notably by means of extraction of aromatic substances such as for example espresso coffee, tea and similar, eventually provided in single-dose packages such as capsules, pods and similar, that provides a plurality of actuation modes and control options upon relevant operation parameters, combined in a multifunctional interface of more ergonomic handling by a user.

This goal is attained according to the present invention by means of a machine for preparing beverages according to claim 1.

According to a preferred embodiment of the present invention, said actuation elements are adapted so as to provide in each case at least one actuation mode by means of an autonomous movement thereof relative to said longitudinal axis.

According to another embodiment, said actuation elements are adapted so as to provide actuation modes by means of a rotation movement of at least one of the actuation elements around said longitudinal axis, preferentially in a transversal plane relative thereto, and by means of a linear movement of at least one of the actuation elements, including in a press button type of movement without retention of the displaced position and in a linear movement along said longitudinal axis between two successive transversal planes with retention of position in the destination plane. Moreover, according to another embodiment, said actuation elements are adapted so that respective actuation modes correspond in each case to different operation parameters.

It is thus provided a clear division of different actuation modes and different operation parameters across different actuation elements, for example start of cycle by means of pressure upon one actuation element and positioning of the beverage discharge by means of rotation of another actuation element, that advantageously simplifies its use by a user.

An associated goal is to provide a machine with an interface providing several actuation modes of simple recognition and quick access by a user, reducing the complexity and dispersion of controls and the time required for actuation of controls to be selected from a menu of options.

According to another embodiment, at least one actuation element is adapted so as to be actuated along a continuous rotation movement around said longitudinal axis, thereby corresponding to a substantially continuous variation of the associated operation parameter.

According to another embodiment, at least one actuation element is adapted so as to be actuated along a rotation movement around said longitudinal axis between at least two previously defined successive angular positions, in particular an initial angular position and a final angular position, corresponding in each case to previously defined values of an associated operation parameter.

According to another preferred embodiment, at least one actuation element is adapted so that a first position thereof corresponds to a non operating condition of the beverage preparation cycle or to a non selection of an option or value of an associated operation parameter, and at least a second position corresponds to a operating condition of the beverage preparation cycle or selection of an option or value of an associated operation parameter.

According to another embodiment, the regulation of an operation parameter may be carried out in a indicative way or in a quantified way, including with display of a respective value. Moreover, the actuation of the actuation device of an operation parameter may further include a previously defined temporization of respective duration. For example, the actuation of a type pressure button for start of a beverage preparation cycle may be associated with a previously defined duration.

The multifunctional interface thus provides a plurality of actuation modes advantageously combined in a single construction element and by means of a plurality of simple movements in a relatively reduced space.

According to a preferred embodiment of the present invention, the first actuation element is disposed further distanced relative to the machine chassis and provided as a single actuation button. Moreover, it is particularly preferred when the first actuation element is provided in a box-like form extending over the entire outside surface thereof and with the at least approximate dimension of a hand.

According to another preferred embodiment, at least two of said actuation elements are provided adjacent to each other and present a substantially similar and preferentially circular cross section, thereby forming an at least approximate cylindrical configuration.

According to a preferred embodiment, the actuation elements are provided in engagement with a common support element. This support element is provided in tubular form and adapted so as to provide the movements by the actuation elements relative to said longitudinal axis. Moreover, it is further preferred when said support element is provided so as to comprise at least one flow conduct connecting an upstream extraction device to the beverage discharge in the multifunctional interface.

According to another embodiment, the multifunctional interface presents visual display means relative to at least some of the operation parameters, including preferentially luminous means associated with different conditions. Moreover, it is preferred when the multifunctional interface further presents acoustic means for communicating at least one of its conditions.

According to another embodiment, the multifunctional interface is adapted so as to be directly actuated, preferentially manually, or remotely actuated.

According to another embodiment, the control device is adapted so as to register the actuations carried out in the multifunctional interface.

According to another preferred embodiment of the present invention, said multifunctional interface provides the actuation of the start of beverage preparation cycle, and at least one, preferentially all the operation parameters available for control of said beverage preparation cycle.

Examples of operation parameters provided in the multifunctional interface include the start of beverage preparation cycle, the relative position of the beverage discharge, in particular the height thereof relative to a support for beverage recipients, the type of beverage to be produced (e.g., espresso coffee, coffee latte), the quantity of beverage to be produced, the quantity of crème to be produced, the operating temperature and/or pressure to be used in beverage preparation cycle, the inclusion of another fluid in mixture and respective mixing fraction, and other that are relevant for the operation control of the beverage preparation machine.

Another goal of the present invention is to provide a process for simple and reliable operation of a machine for preparation of beverages, in particular one according to the present invention.

This goal is attained by means of a process according to claim 11.

According to a first aspect of the present invention, said process comprises the step of actuation of at least one multifunctional interface so as to actuate at least one respective operation parameter, whereby said actuation is carried out by means of a linear movement and/or of a rotation movement by at least one of the at least two actuation elements of said multifunctional interface relative to a longitudinal axis thereof.

According to a preferred embodiment, the actuation of at least one of said actuation elements by means of a linear movement along said longitudinal axis, including in a type of pressure button movement, corresponds to one actuation mode of an operation parameter, and the actuation of said actuation element along a rotation movement around said longitudinal axis corresponds to a different actuation mode of the same or of another different operation parameter.

According to another embodiment, said actuation of at least one of said actuation elements is carried out along successive previously defined position or along a previously defined extension, whereby a respective regulation of an operation parameter is carried out in indicative way or in quantified way.

According to another embodiment, the actuation sequence of at least two, preferentially any operation parameters by said actuation elements, is indifferent.

According to another embodiment, the actuation of at least one of said actuation elements is preceded by a linear movement thereof relative to said longitudinal axis.

### Description of the figures

The invention shall now be explained in greater detail based upon preferred embodiments and attached Figures.

The Figures show in simplified schematic representations:
- Figures 1a - 1b:: side and front views of a beverages preparation machine (1) according to the invention, presenting a multifunctional interface (7), as well as two respective detail views (P01, P02) thereof;
- Figures 2a - 2b:: side and front detail views of a first embodiment of a multifunctional interface (7) in a beverages preparation machine (1) according to the invention;
- Figures 3a - 3b:: side and front detail views of a second embodiment of a multifunctional interface (7) in a beverages preparation machine (1) according to the invention.

### Detailed description of the invention

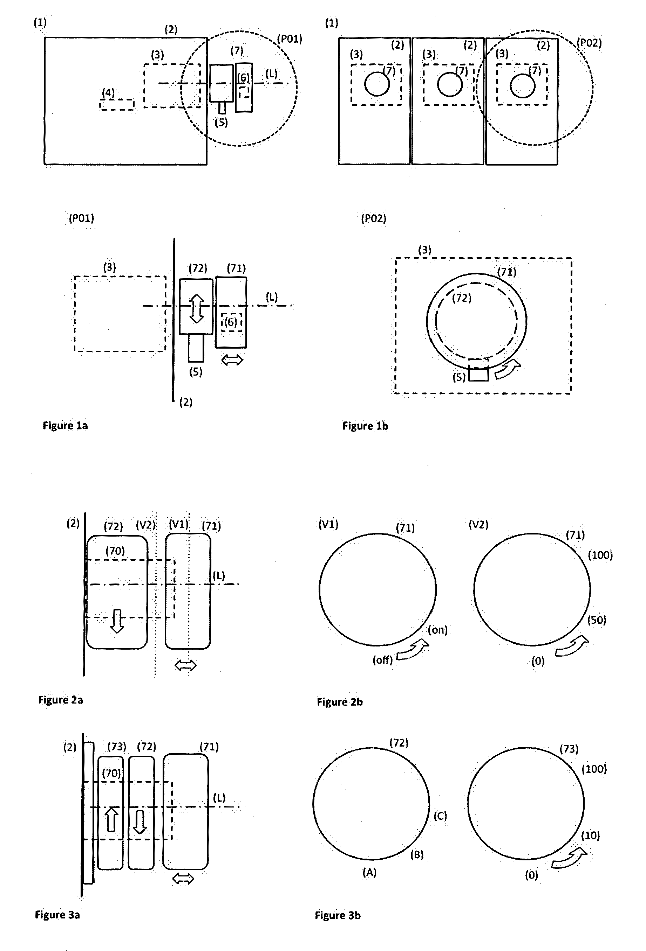

Figures 1a and 1b represent a beverages preparation machine (1) according to the present invention, presenting a machine chassis (2), at least one extraction device (3) provided inside of the chassis (2) and in operational connection with a, preferentially respective, control device (4), at least one beverage discharge (5) in fluid communication with a, preferentially respective, extraction device (2) and disposed downstream thereof, at least one actuation device (6) in operational connection with the control device (4) so as to provide at least the actuation of start of the beverage preparation cycle, and at least one multifunctional interface (7) provided in the front zone of the chassis (2) and preferentially presenting at least one beverage discharge (5).

According to a first aspect, said multifunctional interface (7) is configured in a handle-like form including a longitudinal axis (L) projecting from the front zone of the chassis (2), and presenting at least two actuation elements (71, 72) disposed successively along said longitudinal axis (L) and adapted so that each provides at least one actuation mode upon one operating parameter, preferentially also upon said at least one beverage discharge (5).

In particular, said multifunctional interface (7) provides to a user a plurality of actuation modes for acting upon at least one, preferentially all of the operation parameters provided by said control device (4) and for regulation of the relative position of said beverage discharge (5).

In the case of a first embodiment, as it can be seen in the detail view (P01) of Figure 1a, the multifunctional interface (7) presents two actuation elements (71, 72) of different dimensions and concentric relative to a longitudinal axis (L) of a multifunctional interface (7), whereby a first actuation element (71) is provided further distanced from the chassis (2) and includes the actuation device (6), and a second actuation element (72) is adjacent to the first and presents a beverage discharge (5). According to the present invention, said actuation elements (71, 72) are adapted so that they provide at least two actuation modes upon at least one operation parameter, for example the start of beverage preparation cycle, and preferentially also the relative positive of the beverage discharge (5). In this case, the actuation element (71) is adapted so that a user can actuate the actuation device (6) by means of a linear displacement of said actuation element (71), for example as a sort of pressure button, and further provides another actuation mode upon the same operation parameter, i.e. the actual duration of the beverage preparation cycle, for example by keeping it on-going as long as it is actuated, by means of a rotation of said actuation element (71) around said longitudinal axis (L). Moreover, the second actuation element (72) is adapted so that its rotation around said longitudinal axis (L) provides an actuation mode upon the relative positive of the beverage discharge (5).

Figure 1b represents a beverages preparation machine (1) de with a plurality of modules each presenting an extraction device (3) and a respective multifunctional interface (7) presenting a beverage discharge (5) in fluid communication with said extraction device (3). The detail view (P02) schematically illustrates the possibility of the first actuation element (71) also actuate the actuation device (6) by means of its rotation, for example in a relative extension corresponding to the operating period of the beverage preparation cycle, or to the quantity of beverage to be produced in a respective preparation cycle.

In a second preferred embodiment of the present invention (see Figures 2a and 2b), the multifunctional interface (7) further presents two actuation elements (71, 72) presenting similar cross sections, preferentially configured in tubular form and disposed adjacently over a common support (70). According to a preferred embodiment, said common support (70) is configured in tubular form so as to house inside thereof at least one flow conduct connecting to said beverage discharge (5).

As illustrated, one first actuation element (71) can be actuated when disposed in a first position (V1) relative to said longitudinal axis (L), for example by means of rotation thereof thereby actuating upon a given operation parameter, and be linearly displaced to a second position (V2) relative to said longitudinal axis (L), so that a rotation thereof in this case actuates upon another operation parameter.

The actuation mode upon each operation parameter may be configured so that it corresponds to a substantially continuous and linear variation of said operation parameter. For example, a continuous and linear increase of the quantity of beverage to be produced between a reference initial value and reference final value, as illustrated in the left drawing of Figure 2b. Alternatively, the variation may be continuous and follow another type of progression, such as for example exponential.

Moreover, the actuation mode of each operation parameter may be configured so as to actuate a variation between successive reference values of a respective measuring unit. For example, a variation of the quantity of beverage to be produced between previously defined positions of possible displacement of an actuation element, whereby each of said positions corresponds to a specific quantity of beverage. This possibility is illustrated in the drawing on the right side of Figure 2b.

A further preferred embodiment consists in an actuation mode of an operation parameter comprising a first movement of an actuation element (71, 72), for example linearly displacing it from a first position (V1) to a second position (V2) relative to said longitudinal axis (L), followed by a second movement, for example of rotation thereof in said second position (V2) along an extension corresponding to the required relative variation of said operation parameter. One example would be the option for production of a relative amount of crème.

According to a third preferred embodiment of the present invention, represented in Figures 3a and 3b, the multifunctional interface (7) presents three actuation elements (71, 72, 73) disposed successively along a longitudinal axis (L). In this case, a first actuation element (71) is configured for actuation as a pressure button, notably of an actuation device (6) provided inside thereof and for actuation of a beverage preparation cycle. According to another embodiment, one actuation mode of the actuation device (6) may correspond only to the start of the beverage preparation cycle, with a previously defined duration of operation, whereas another actuation mode may include the start, for example by means of displacing the actuation element (71) from an initial position (V1), and the stop of a beverage preparation cycle, for example returning said actuation element (71) to its initial position.

A second and third actuation elements (72, 73) are configured so that they are actuated by rotation, for example in opposite directions (as indicated by respective arrows in Figure 3a), thereby controlling a respective operation parameter to be communicated to the control device (4) of the beverage preparation machine (1).

In the embodiment represented in Figure 3b, a user might initially select the type of beverage (for example café latte) by rotating a second actuation element (72) in a respective position, and then select the mixture fraction of a respective fluid (in this case, milk) by means of rotating a third actuation element (73).

## Claims

1. Machine (1) for the preparation of aromatic beverages such as espresso coffee and similar, presenting a machine chassis (2) and:
- at least one extraction device (3) provided in operational connection with a control device (4) adapted so as to control at least one, preferentially a plurality of operation parameters,
- at least one beverage discharge (5) in fluid communication with an extraction device (3) and disposed downstream thereof,
- at least one actuation device (6) in operational connection with said control device (4) so as to provide at least the actuation of start of beverage preparation cycle,
- at least one multifunctional interface (7) projecting from the frontal zone of the chassis (2) along a longitudinal axis (L) in a handle-like form,
**characterized in that** said multifunctional interface (7) presents said beverage discharge (5) and at least two actuation elements (71, 72) developing successively along said longitudinal axis (L) and presenting a similar circular cross section and adapted so as to provide at least two actuation modes associated with at least one operation parameter including the relative position of the beverage discharge (5) so as to vary the relative height thereof.

2. Machine (1) according to claim 1, **characterized in that** said actuation elements (71, 72) are adapted so that each one provides at least one actuation mode by means of at least one autonomous movement thereof relative to said longitudinal axis (L).

3. Machine (1) according to claim 1 or 2, **characterized in that** said actuation elements (71, 72) are adapted so as to provide actuation modes including by means of a rotation movement of at least one of said actuation elements (71, 72) around said longitudinal axis (L) and by means of a linear movement of at least one of said actuation elements (71, 72) along said longitudinal axis (L), including in a pressure button type of movement without retention of displaced position and in a linear movement between two successive positions (V1, V2) with retention in the destination position.

4. Machine (1) according to any of previous claims 1 to 3, **characterized in that** said actuation elements (71, 72) are adapted so that respective actuation modes correspond to different operation parameters.

5. Machine (1) according to any of previous claims 1 to 4, **characterized in that** at least one of said actuation elements (71, 72) is adapted so that it can be actuated by means of a continuous rotating movement around said longitudinal axis (L), thereby corresponding to a substantially continuous variation of the associated operating parameter.

6. Machine (1) according to any of previous claims 1 to 4, **characterized in that** at least one of said actuation elements (71, 72) is adapted so that it can be actuated by means of a rotation movement around said longitudinal axis (L) between at least two successive angular positions, in particular an initial angular position and a final angular position corresponding in each case to previously defined values of the associated operation parameter.

7. Machine (1) according to any of previous claims 1 to 6, **characterized in that** at least one of said actuation elements (71, 72) is adapted so that a first reference position thereof corresponds to a non operating condition of the beverage preparation cycle or to a non selection condition of an option or value of an associated operation parameter, and at least a reference second position thereof corresponds to an operating condition of the beverage preparation cycle or to a selection condition of an option or value of an associated operation parameter.

8. Machine (1) according to any of previous claims 1 to 7, **characterized in that** a first actuation element (71) is disposed further distanced from the chassis (2), whereby said first actuation element (71) is preferentially provided as a single actuation button in a box-like form extending over the entire outside surface of said first actuation element (71) and with the at least approximate dimension of the palm of a hand.

9. Machine (1) according to any of previous claims 1 to 8, **characterized in that** at least two of said actuation elements (71, 72) are provided successively adjacent and present an at least approximately cylindrical configuration.

10. Machine according to any of previous claims 1 to 9, **characterized in that** at least two of said actuation elements (71, 72) are provided in engagement with a common support element (70) and in said common support element (70) that comprises at least one flow conduct.

11. Process for operating a beverage preparation machine, comprising the steps of:
- provision of a beverage preparation machine (1) according to any one of previous claims 1 to 10,
- actuation of at least one multifunctional interface (7) of said beverage preparation machine (1) so as to actuate at least one operation parameter,
**characterized in that** said actuation is carried out by means of a linear movement and/or of a rotation movement of at least one of the actuation elements (71, 72) of said multifunctional interface (7) relative to a longitudinal axis (L) thereof.

12. Process according to claim 11, **characterized in that** the actuation of at least one of said actuation elements (71, 72) by means of a linear movement relative to said longitudinal axis (L), including in a pressure button type of movement, corresponds to an actuation mode of an operation parameter, and the actuation of said actuation element (71) by means of a rotation movement relative to said longitudinal (L) corresponds to a different actuation mode of the same operation parameter or of a different operation parameter.

13. Process according to claims 11 or 12, **characterized in that** said actuation of at least one of said actuation elements (71, 72) is carried out along successive previously defined reference positions or along a previously defined extension, whereby the corresponding regulation of an operation parameter is carried out in an indicative way or in a quantitative way.

14. Process according to claims 11 to 13, **characterized in that** it is indifferent the sequence of actuation of at least two, preferentially any operation parameters, by means of respective actuation elements (71, 72).

15. Process according to claims 11 to 13, **characterized in that** the actuation of at least one of said actuation elements (71, 72) by means of a rotation movement relative to said longitudinal axis (L) is preceded by a linear movement thereof relative to said longitudinal axis (L).

## Patentansprüche

1. Maschine (1) zur Zubereitung von aromatischen Getränken wie Espressokaffee und Ähnliches stellt ein Maschinenchassis (2) dar und:
- mindestens ein Anzapfgerät (3) vorhanden in betrieblicher Verbindung mit einem Kontrollgerät (4) so angepasst, um mindestens einen, vorzugsweise eine Mehrheit von betrieblichen Parametern zu kontrollieren,
- mindestens eine Getränkeabführung (5) in flüssiger Verbindung mit einem Anzapfgerät (3) und stromabwärts davon zurechtgelegen,
- mindestens ein Betätigungsgerät (6) in betrieblicher Verbindung mit genanntem Kontrollgerät (4), so um mindestens die Stärtbetätigung vom Getränkezubereitungszyklus auszustatten,
- mindestens eine Anschlussstelle (7), die von der frontalen Zone des Chassis (2) entlang einer längslaufenden Achse (L) in einer griffförmigen Form projiziert,
**dadurch gekennzeichnet, dass** genannte Anschlussstelle (7) genannte Getränkeabführung (5) darstellt und mindestens zwei Betätigungselmente (71, 72), die sich aneinanderfolgend entlang genannter längslaufenden Achse (L) entwickelt und eine ähnliche kreisförmige Kreuzabteilung darstellt und so angepasst, um mindestens zwei Betätigungsmodi auf mindestens einem betrieblichen Parameter bezogen auszustatten, einschließlich die relative Höhe der relativen Position von der Getränkeabführung (5) davon zu ändern.

2. Maschine (1) gemäß Anspruch 1 **dadurch gekennzeichnet, dass** genannte Betätigungselemente (71, 72) so angepasst sind, dass jedes mindestens ein Betätigungsmodus durch mindestens eine autonome Bewegung davon relativ zur genannten längslaufenden Achse (L) versorgt.

3. Maschine (1) gemäß Anspruch 1 oder 2 **dadurch gekennzeichnet, dass** genanntes Betätigungselement (71, 72) so angepasst ist, um Betätigungsmodi einschließlich durch eine Drehungsbewegung von mindestens einem Betätigungselement (71, 72) um genannte längslaufenden Achse (L) herum zu versorgen, einschließlich in einer Bewegungsart von Druckknopf ohne Zurückhaltung von versetzter Position und in einer linearen Bewegung zwischen zwei aneinanderfolgenden Positionen (V1, V2) mit Zurückhaltung in die Zielposition.

4. Maschine (1) gemäß einem der vorigen Ansprüche 1 bis 3 **gekennzeichnet dadurch, dass** genannte Betätigungselemente (71, 72) so angepasst sind, dass entsprechende Betätigungsmodi verschiedenen Betriebsparametern entsprechen.

5. Maschine (1) gemäß einem der vorigen Ansprüche 1 bis 4 **gekennzeichnet dadurch, dass** mindestens ein der genannten Betätigungselemente (71, 72) so angepasst ist, um durch die kontinuierliche Drehungsbewegung um genannte längslaufenden Achse (L) herum betätigen zu können, dadurch einer wesentlich kontinuierlichen Variation vom bezogenen betrieblichen Parameter zu entsprechen.

6. Maschine (1) gemäß einem der vorigen Ansprüche 1 bis 4 **gekennzeichnet dadurch, dass** mindestens ein der genannten Betätigungselemente (71, 72) so angepasst ist, um durch eine Drehungsbewegung um genannte längslaufenden Achse (L) herum zwischen mindestens zwei aneinanderfolgenden Eckpositionen betätigen zu können, insbesondere einer Starteckposition und einer Endeckposition, in dem jeder Fall vorherig definierte Werte von bezogenen Betriebsparametern entspricht.

7. Maschine (1) gemäß einem der vorigen Ansprüche 1 bis 6 **gekennzeichnet dadurch, dass** mindestens ein der genannten Betätigungselemente (71, 72) so angepasst ist, dass eine erste Bezugsposition davon einer nicht-betrieblichen Kondition vom Getränkezubereitungszyklus oder einer nicht-Wahlkondition von einer Option oder einem Wert von einem bezogenen betrieblichen Parameter entspricht, und mindestens einer Bezugszweitposition davon einer betrieblichen Kondition vom Getränkezubereitungszyklus oder einer Wahlkondition von einer Option oder einem Wert von einem bezogenen betrieblichen Parameter entspricht.

8. Maschine (1) gemäß einem der vorigen Ansprüche 1 bis 7 **gekennzeichnet dadurch, dass** ein erstes Betätigungselement (71) weiter entfernt vom Chassis (2) zurechtgelegen ist, wobei genanntes erstes Betätigungselement (71) vorzugsweise als ein einzelner Betätigungsknopf in einer Box-ähnlichen Form vorhanden ist, die sich über die ganze Außenoberfläche von genanntem ersten Betätigungselement (71) und mit mindestens annähernder Dimension der Handoberfläche verbreitet.

9. Maschine (1) gemäß einem der Ansprüche 1 bis 8 **dadurch gekennzeichnet, dass** mindestens zwei der genannten Betätigungselemente (71, 72) aneinanderfolgend benachbart und anwesend einer mindestens annähernd zylindrischen Konfiguration vorhanden sind.

10. Maschine gemäß einem der Ansprüche 1 bis 9 **dadurch gekennzeichnet, dass** mindestens zwei der genannten Betätigungselemente (71, 72) in Eingriff mit einem gemeinsamen Stützungselement (70) und im genannten gemeinsamen Stützungselement (70) vorhanden sind, das mindestens eine Fließleitung beinhaltet.

11. Verfahren zum Betreiben einer Getränkezubereitungsmaschine, die die Schritte beinhaltet von:
- Versorgung einer Getränkezubereitungsmaschine (1) gemäß einem der vorigen Ansprüche 1 bis 10,
- Betätigung von mindestens einer multifunktionierenden Anschlussstelle (7) von genannter Getränkezubereitungsmaschine (1), so um mindestens einen Betriebsparameter zu betätigen,
**dadurch gekennzeichnet, dass** genannte Betätigung durch eine lineare Bewegung und/oder eine Drehungsbewegung von mindestens einem der Betätigungselemente (71, 72) von genannter multifunktionierenden Anschlussstelle (7) bezüglich einer längslaufenden Achse (L) davon durchgeführt wird.

12. Verfahren gemäß Anspruch 11 **dadurch gekennzeichnet, dass** die Betätigung von mindestens einem der genannten Betätigungselemente (71, 72) durch eine lineare Bewegung bezüglich genannter längslaufenden Achse (L), einschließlich in einer Bewegungsart eines Druckkopfes, einem Betätigungsmodus von einem Betriebsparameter entspricht, und die Betätigung von genanntem Betätigungselement (71) durch eine Drehungsbewegung bezüglich genannter längslaufenden (L) einem verschiedenen Betätigungsmodus vom selben Betriebsparameter oder von einem verschiedenen Drehungsparameter entspricht.

13. Verfahren gemäß Ansprüche 11 oder 12 **dadurch gekennzeichnet, dass** genannte Betätigung von mindestens einem der genannten Betätigungselemente (71, 72) entlang einer vorher definierten Ausweitung durchgeführt wird, wobei die entsprechende Regulierung von einem Betriebsparameter in einen anzeigenden Weg oder in einen quantitativen Weg durchgeführt wird.

14. Verfahren gemäß Ansprüche 11 bis 13 **dadurch gekennzeichnet, dass** die Betätigungsreihenfolge von mindestens zwei, vorzugsweise irgendeinem Betriebsparameter, durch entsprechende Betätigungselemente (71, 72) unwichtig ist.

15. Verfahren gemäß Ansprüche 11 bis 13 **dadurch gekennzeichnet, dass** die Betätigung von mindestens einem der Betätigungselemente (71, 72) durch eine Drehungsbewegung bezüglich genannter längslaufenden Achse (L) einer linearen Bewegung davon bezüglich genannter längslaufenden Achse (L) vorangeht.

## Revendications

1. Machine (1) pour la préparation de boissons aromatiques tel que le café expresso et similaires, présentant un châssis de machine (2) et :
- au moins un dispositif d'extraction (3) fourni en connexion opérationnelle avec un dispositif de contrôle (4) adapté afin de : contrôler au moins un, mais de préférence plusieurs, paramètre(s) opérationnel(s),
- au moins une décharge de boisson (5) en communication fluide avec un dispositif d'extraction (3) disposé en aval de celui-ci,
- au moins un dispositif d'activation (6) en connexion opérationnelle avec ledit dispositif de contrôle (4) afin de fournir au moins l'activation du démarrage du cycle de préparation de la boisson,
- au moins une interface multifonction (7) projetant depuis la zone frontale du châssis (2) le long d'un axe longitudinal (L) sous une forme similaire à une poignée, caractérisée dans ladite interface multifonction (7) présentant ladite décharge de boisson (5) et au moins deux éléments d'actionnement (71, 72), développant successivement le long dudit axe longitudinal (L) et présentant une section en croix circulaire similaire et adaptée afin de fournir au moins deux modes d'actionnement associés avec au moins un paramètre opérationnel, y compris la position relative de la décharge de boisson (5) afin de varier la hauteur relative de celle-ci.

2. Machine (1) selon la revendication 1, **caractérisée par** lesdits éléments d'actionnement (71, 72) étant adaptés afin que chacun fournisse au moins un mode d'actionnement au moyen d'au moins un mouvement autonome de celui-ci, relatif à l'axe longitudinal (L).

3. Machine (1) selon la revendication 1 ou 2, **caractérisée par** lesdits éléments d'actionnement (71, 72), adaptés afin de fournir des modes d'actionnement, y compris au moyen d'un mouvement de rotation d'au moins un des éléments d'actionnement (71, 72) autour dudit axe longitudinal (L) et au moyen d'un mouvement linéaire d'au moins un des éléments d'actionnement (71, 72) le long de l'axe longitudinal (L), y compris par un type de bouton de pression à mouvement sans rétention de la position déplacée et dans un mouvement linéaire entre deux positions successives (V1, V2), avec rétention en position de destination.

4. Machine (1) selon une quelconque des revendications précédentes entre 1 et 3, **caractérisée par** lesdits éléments d'actionnement (71, 72), adaptés afin que les modes d'actionnement respectifs correspondent à des paramètres opérationnels différents.

5. Machine (1) selon une quelconque revendication précédente entre 1 et 4, **caractérisée par le fait qu'**au moins un des éléments d'actionnement (71, 72) est adapté afin qu'il puisse être actionné au moyen d'un mouvement rotatif continu autour dudit axe longitudinal (L), correspondant ainsi à une variation continue substantielle du paramètre opérationnel associé.

6. Machine (1) selon une quelconque revendication précédente entre 1 et 4, **caractérisée par le fait qu'**au moins un des éléments d'actionnement (71, 72) est adapté afin qu'il puisse être actionné au moyen d'un mouvement rotatif continu autour dudit axe longitudinal (L), entre au moins deux positions angulaires successives, en particulier une position angulaire, initiale et une position angulaire finale correspondant dans chaque cas à des valeurs définies antérieurement du paramètre opérationnel associé.

7. Machine (1) selon une quelconque revendication précédente entre 1 et 6, **caractérisée par le fait qu'**au moins un des éléments d'actionnement (71, 72) est adapté afin qu'une première position de référence de celle-ci corresponde à une condition non opérationnelle du cycle de préparation de la boisson ou à une condition de non sélection d'une option ou d'une valeur d'un paramètre opérationnel associé et au moins une seconde position de référence de celle-ci corresponde à une condition opérationnelle du cycle de préparation de la boisson ou à une condition de sélection d'une option ou d'une valeur d'un paramètre opérationnel associé.

8. Machine (1) selon une quelconque revendication précédente entre 1 et 7, **caractérisée par le fait que** le premier élément d'actionnement (71) est disposé à une distance plus éloignée du châssis (2), où ledit premier élément d'actionnement (71) est fourni de préférence comme seul bouton d'actionnement sous une forme similaire à une boîte, s'étendant sur toute la surface externe dudit premier élément d'actionnement (71) et ayant au moins une dimension approximative équivalente à la paume d'une main.

9. Machine (1) selon une quelconque revendication précédente entre 1 et 8, **caractérisée par le fait qu'**au moins deux des éléments d'actionnement (71, 72) sont fournis successivement de forme adjacente et présentent une configuration cylindrique.

10. Machine selon une quelconque revendication précédente entre 1 et 9, **caractérisée par le fait qu'**au moins deux des éléments d'actionnement (71, 72) sont fournis dans un engagement avec un élément de support commun (70) et à l'intérieur dudit élément de support commun (70) qui compromet au moins une conduite de flux.

11. Processus pour faire fonctionner une machine de préparation de boisson, comprenant les étapes de
- Fourniture d'une machine de préparation de boisson (1) selon une quelconque revendication précédente entre 1 et 10,
- Actionnement d'au moins une interface multifonction (7) de la machine de préparation de boisson (1), afin d'agir sur au moins un paramètre opérationnel,
**caractérisé par le fait que** ledit actionnement est mené au moyen d'un mouvement linéaire et/ou d'un mouvement de rotation d'au moins un des éléments d'actionnement (71, 72) de ladite interface multifonction (7) relative à un axe longitudinal (L) de celle-ci.

12. Processus selon la revendication 11, **caractérisé par le fait que** l'actionnement d'au moins un des éléments d'actionnement (71, 72) au moyen d'un mouvement linéaire relatif à l'axe longitudinal (L), y compris dans un type de mouvement de bouton à pression, correspond à un mode d'actionnement d'un paramètre opérationnel, et l'actionnement dudit élément d'actionnement (71) au moyen d'un mouvement de rotation relatif au longitudinal (L) correspond à un mode d'actionnement différent du même paramètre opérationnel ou d'un paramètre opérationnel différent.

13. Processus selon les revendications 11 ou 12, **caractérisé par le fait que** l'actionnement d'au moins un des éléments d'actionnement (71, 72) est mené avec des positions de référence définies précédemment et successives ou avec une extension définie précédemment, où la régulation correspondante d'un paramètre opérationnel est menée dans un sens indicatif ou quantitatif.

14. Processus selon une quelconque revendication entre 11 et 13, **caractérisé par le fait qu'**il est indifférent que la séquence d'actionnement d'au moins deux, de préférence un quelconque paramètre opérationnel, soit faite au moyen des éléments d'actionnement respectifs (71, 72).

15. Processus selon une quelconque revendication entre 11 et 13, **caractérisé par le fait que** l'actionnement d'au moins un des éléments d'actionnement (71, 72) au moyen d'un mouvement rotatif relatif à l'axe longitudinal (L) est précédé par un mouvement linéaire de celui-ci relativement à l'axe longitudinal (L).
